(19) Europäisches Patentamt
European Patent Office
Office européen des brevets

(11) EP 4 755 536 A1

(12) EUROPEAN PATENT APPLICATION

(43) Date of publication:
**10.06.2026 Bulletin 2026/24**

(21) Application number: **25219662.1**

(22) Date of filing: **01.12.2025**

(51) International Patent Classification (IPC):
***B09B 3/30*** *(2022.01)* ***A62D 3/33*** *(2007.01)*
***A62D 3/36*** *(2007.01)* ***B09B 3/70*** *(2022.01)*
***B09B 5/00*** *(2006.01)* ***C01D 7/00*** *(2006.01)*
***C01D 7/22*** *(2006.01)* ***C01F 11/18*** *(2006.01)*
***C01F 11/28*** *(2006.01)* ***C01F 11/32*** *(2006.01)*
***C02F 9/00*** *(2023.01)* *A62D 101/08 (2007.01)*
*A62D 101/40 (2007.01)* *A62D 101/43 (2007.01)*
*A62D 101/47 (2007.01)* *B09B 101/30 (2022.01)*

(52) Cooperative Patent Classification (CPC):
**B09B 5/00; B09B 3/30; B09B 3/70; C01D 7/00; C01D 7/22; C01F 11/18; C01F 11/28; C01F 11/32; C02F 9/00;** B09B 2101/30; C02F 2101/10; C02F 2101/20; C02F 2101/36; C02F 2301/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.12.2024 IT 202400027912**

(71) Applicant: **Waste Treatment Company S.r.l.**
**35127 Padova (IT)**

(72) Inventor: **BOSCHI, Giorgio**
**35127 Padova (IT)**

(74) Representative: **Braidotti, Andrea et al**
**Praxi Intellectual Property S.p.A.**
**Via F. Baracca, 5/A**
**30173 Venezia (IT)**

# (54) TREATMENT/RECOVERY PROCESS OF FLY ASH CALLED PSR (RESIDUAL SODIUM PRODUCTS) OBTAINED IN WASTE INCINERATION PLANTS DURING THE EMISSION ABATEMENT PHASE

(57) A process for treating fly ash with a high sodium content that involves:
- an elemental analysis of the ash to determine the content of all the individual soluble sodium salts present and calculate the minimum quantity of water necessary to solubilize them all,
- a phase of activation of water resulting in a cloudy one,
- a filtration phase of the turbidity using a vacuum filter,
- a phase of addition of the liquid phase at the exit of the filter,
- a vacuum filtration of the turbidity at pH = 7,
- a phase of sending the purified sulphur to a mixing reactor (18) where it is added with sodium chloride.

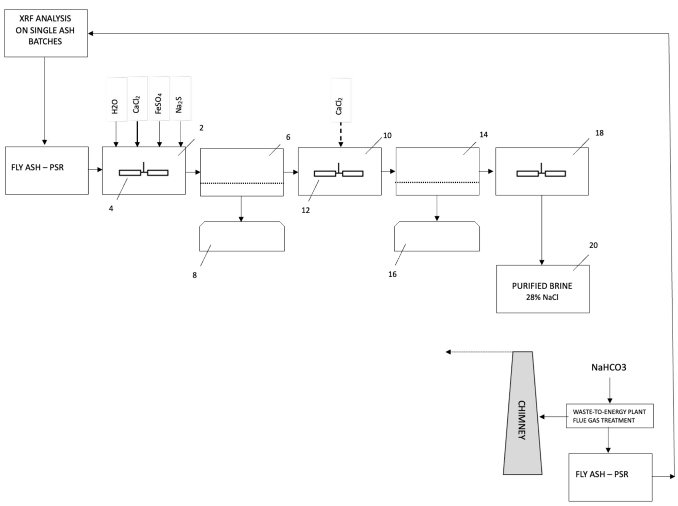




EP 4 755 536 A1

## Description

The present invention concerns a process for the treatment/recovery of fly ash called PSR (Residual Sodium Products), produced in waste incineration plants during the emission abatement phase.

There are well-known incineration plants for municipal solid waste, special waste, and hazardous waste. These plants generally comprise a combustion chamber fed by the waste, a post-combustion chamber, a heat recovery boiler for electricity generation, and a system for treating the cooled flue gases exiting the boiler.

This gas purification system is divided into several sections. In one of these, the flue gases, dedusted at the boiler outlet (with an electrostatic precipitator or bag filter), containing large quantities of acid gases (HCl, SOx, HF) and volatile metals, are treated by injecting $NaHCO_3$ (or equivalent compounds containing sodium carbonates) and powdered activated carbon into them.

The acidic gaseous pollutants HCl, SOx, and HF react with $NaHCO_3$ or, better yet, with $Na_2CO_3$ (bicarbonate becomes carbonate once injected into the hot flue gases), forming solid sodium salts which must then be removed as ash from the gaseous flow with bag filters. Activated carbon adsorbs volatile metals (e.g., mercury, antimony, lead, copper, etc. ) and organochlorine compounds (such as TCDD and TCDF).

The main reactions at play are:

$$2NaHCO_3 \rightarrow Na_2CO_3 + H_2O$$

$$Na_2CO_3 + 2HCl \rightarrow 2NaCl + H_2O + CO_2$$

$$Na_2CO_3 + SO_2 + \tfrac{1}{2} O_2 \rightarrow Na_2SO_4 + CO_2$$

$$Na_2CO_3 + 2HF \rightarrow 2\,NaF + H_2O + CO_2$$

The sodium salts formed (NaCl, $Na_2SO_4$, NaF ) together with the fraction of $Na_2CO_3$ , which has not reacted (since the dosage of injected $NaHCO_3$ is obviously always prudently kept higher than the estimated stoichiometric value to avoid exceeding the acid gases in the stack in the event of under-dosing) and together with the Activated Carbon (and the metals that it has adsorbed), constitute what is called light/fly ash (Fly Ash) in this case called PSR (Residual Sodium Products) precisely because of the high content of recoverable Sodium Salts.

These ashes contain:

- a high concentration - between 50% and 80% by weight - of soluble sodium salts (sodium chloride, sodium sulfate, sodium fluoride, sodium carbonate);
- a certain quantity of activated carbon (which is injected into the flue gases together with $NaHCO_3$);
- relatively high quantities of toxic metals (lead, cadmium, zinc, iron, mercury, hexavalent chromium);
- volatile organic compounds and organochlorines in low concentrations adsorbed on activated carbon.

Disposal of this ash entails a significant financial burden as it must be carried out in special landfills. Given its high soluble salt content (specifically, sodium chloride can range from 30 to 60%), this ash cannot even be accepted in hazardous waste landfills. In fact, the chloride release test limit for hazardous waste landfills is 2500 mg/L. This type of ash exceeds this limit in terms of chloride release by approximately 10 times (20,000 to 35,000 mg/L).

Another critical negative characteristic of ash-with regard to its treatment-is that it is a very fine powder with a very low apparent density of approximately 0.2 g/ml (ranging from 0.15 to 0.28), lower than that of talc. This low density makes it very difficult and dangerous to handle. It can only be handled using perfectly sealed transport systems to prevent it from dispersing into the air, which would have negative consequences for the workplace and the environment in general.

Given the impossibility of being disposed of in landfills (even in those for hazardous waste), the ashes are often disposed of in salt mines at great depths (on the order of hundreds of metres below the earth's surface, beneath the aquifers) or in unlikely inertisation plants (unlikely because - as is known - cold inertisation is incompatible with high salt contents and hot inertisation - for example vitrification plants - would produce high concentrations of gaseous acids (HCl, $H_2SO_4$).

The aim of the invention is to eliminate these drawbacks and to carry out a treatment/recovery of the ash which allows:

i. to concentrate their polluting load in a solid with reduced weight, volume and easy to handle and dispose of;

ii. to obtain a purified brine (containing only soluble sodium salts in a concentration of around 28% corresponding to a density of approximately 1.2 g/ $cm^3$) and free of hazardous substances from which it is possible to start producing industrially usable products such as sodium bicarbonate, calcium chloride and calcium carbonate.

These aims are achieved according to the invention with a process for treating light ashes called PSR (Residual Sodium Products) obtained in waste incineration plants in the emission reduction phase as described in claim 1.

The present invention is further clarified herein in a preferred form of practical embodiment reported for purely illustrative and non-limiting purposes with reference to the attached drawing depicting an ash treatment plant.

As can be seen from the drawing, the treatment process according to the invention provides that the ash (PSR) produced by the waste incineration plant is subjected to the following phases carried out in batches:

Phase A

This phase includes the elemental analysis of each batch of the ash as is with XRF (X-ray fluorescence spectroscopy) to determine the content of all the individual soluble sodium salts present - sodium chloride, sodium sulfate, sodium carbonate, sodium fluoride - and, using an algorithm, calculate the minimum amount of water needed to dissolve them all quantitatively.

Since the concentration of soluble salts is extremely variable and diverse for each batch of ash being treated, the amount of water added will vary from batch to batch. Defining the correct ash-to-water ratio is crucial and essential for the success of the process. Remember that the goal of this phase is to quantitatively separate the entire soluble fraction present in the PSR from its insoluble fraction, using the smallest amount of water possible.

The essential requirement is therefore to know the ash composition of each individual batch to be treated. From the numerous PSR analyses performed and available, it is clear that the ranges of soluble and insoluble fraction content are highly variable.

The soluble fraction, always higher than 20% with more frequent values in the range between 65-85%, is mainly made up of the following salts:

- sodium chloride;
- sodium sulfate
- sodium carbonate

The insoluble fraction (15-35%) is mainly made up of:

- calcium carbonate;
- activated carbon
- metal compounds.

Depending on the solubility of the salts present, a sufficient amount of water must be added to solubilize them quantitatively (100%). For example, the most common salt in the PSR is sodium chloride, which has a solubility of approximately 350 g/L (temperature of 293 °K). To solubilize 350 grams of sodium chloride, I will therefore need to use at least 1 liter of water, and so on. Another salt present is $Na_2CO_3$ , which has a solubility of 220 g/L (temperature of 293 °K). To solubilize 200 grams of sodium carbonate, I will therefore need to use at least 1 liter of water. Given the variability between the soluble and insoluble fractions, I will consequently have a variability in the ash:water ratio, as indicated.

To determine the ash-to-water ratio for each individual batch to be leached, it is therefore necessary to know the content of the various sodium salts present in each individual batch through an analysis of the sodium, chlorine, sulfur, and fluorine content (using an XRF at the head of the plant). In this way - with a simple calculation - the concentrations of NaCl, $Na_2SO_4$, NaF and $Na_2CO_3$ present for each batch will be known, and with a simple algorithm into which the solubilities of the individual salts are inserted, the quantity of water to be added will be calculated.

Phase B.

This phase includes the addition of the quantity, as defined in phase A, of water to the ash in a reactor (2), equipped with a stirrer (4), for a variable time between 20 min and 1 hour at room temperature, resulting in a cloudy solution with a concentration of sodium salts in solution of no less than 20% and a pH of no less than 11.5-12.5, due to the presence of high concentrations of carbonates;

The ashes are leached using a batch process (i.e. discontinuously) by adding water to them in a reactor 2, equipped with a stirrer 4, to obtain a slurry in which the concentration of sodium salts must be no less than 20%.

The amount of water to be added to the ash varies in relation to the amount of soluble salts present in the ash, determined as described in phase A.

By adding water to the ash in the appropriate proportion and stirring thoroughly for 20 minutes to an hour, all soluble salts are dissolved. Mixing is done at room temperature.

Once all soluble salts and compounds have been dissolved, given the significant concentrations of carbonates in solution, the solution has a high pH, which makes the precipitation of soluble metals difficult. In fact, the solution's pH is normally above 11.5-12.

Phase C.

This phase involves adding calcium chloride to the slurry while mixing, which precipitates the carbonates as solid calcium carbonate under pH control until the pH value reaches approximately 11. In order to precipitate the soluble metals present in the solution, it is necessary to lower the pH to values around 11. The high pH of the slurry obtained by mixing ash and water is in fact due almost exclusively to the presence of carbonates in the solution.

In fact, there is a direct correlation between the concentration of carbonates and the pH according to the formula:

$$(OH^-)^2 = K_b \cdot C_b = K_w / K_{H2CO3} \cdot C_b = 2.1 \cdot 10^{-4} \cdot C_b$$

$C_b$= $CO_3$ concentration =

The concentration of ($OH^-$), and hence the pH, depends directly on the concentration of $CO_3^=$

In practice, knowing the concentration of carbonates $CO_3^=$ the pH value is obtained.

For example, let's consider a typical PSR with these characteristics:

| | % |
|---|---|
| Sodium Chloride, NaCl | 50-60 |
| Sodium Sulfate, $Na_2SO_4$ | 10-20 |
| Sodium Carbonate, $Na_2CO_3$ | 15-30 |
| Insoluble | 10-20 |

The compound that affects the pH is $Na_2CO_3$.

With a simple calculation we find (for a solution of ash and water in a ratio of 1:3):

- pH with $Na_2CO_3$ 15 % (molar →concentration 0.47) pH = 12.00
- pH with $Na_2CO_3$ 30% (molar →concentration 0.94) pH = 12.15

The pH of the ash is in fact almost always in this range (between 11.8 and 12.4).

To remove soluble metals from solution, it is necessary to transform them into insoluble solid metal compounds. This is achieved by:

- lowering the pH to values around 11
- by dosing reagents capable of forming insoluble solid metal sulphides at that pH

In the case of solutions rich in soluble carbonates, lowering the pH can only be achieved by removing the carbonates from the solution. Carbonate removal can be achieved in two ways: by adding a strong acid, which converts the carbonates into CO2, or by precipitating the carbonates, forming insoluble $CaCO_3$.

pH reduction can be achieved in two ways:

A. Adding a strong acid (e.g. HCl)

$$Na_2CO_3 + 2HCl \rightarrow CO_2 \uparrow + 2NaCl$$

B. Adding $CaCl_2$

$$CaCl_2 + Na_2CO_3 \rightarrow CaCO_3 \downarrow + 2NaCl$$

The mode TO (the one that involves the addition of hydrochloric acid) requires large quantities of HCl (1000 grams of HCl at 10% by weight per 1000 grams of PSR) and produces $CO_2$ gas that disperses irreversibly into the environment. While mode B removes the soluble carbonate, making it insoluble in the form of calcium carbonate. From simple stoichiometric calculations, it is clear that to go from pH 12.15 to 11.2 we must go from a $Na_2 CO_3$ concentration of 300 grams/3 litres to one of 3.18 grams/3 litres.

The reaction to consider is the following:

$$Na_2CO_3 + 2HCl \rightarrow CO_2 \uparrow + 2NaCl$$

The quantity of HCl to be added must be equal to that needed to react 297 grams (2.80 moles) of $Na_2CO_3$, or 5.6 ( 2.8x2 ) moles of HCl, or 204 grams of pure HCl, or 552 grams of 37% concentrated HCl (fuming), or approximately 1000 grams of 10% Hydrochloric Acid.

In the case where the quantity of $Na_2CO_3$ is 300 g (2.8 moles) per kilo of ash-PSR, the quantity of $CO_2$ developed will be equal to 2.8 moles of $CO_2$ or 123 grams of $CO_2$.

In the case of the application in question, the demolition of the pH is lowered by adding $CaCl_2$, which leads to the sequestration of carbonates in the form of insoluble calcium carbonate. The reaction is not reversible under normal environmental conditions. Furthermore, the $CaCl_2$ formed is a reusable byproduct of the process.

The difference between the use of HCl and $CaCl_2$ is macroscopic.

PHASE D.

In the same reactor (2") $Na_2S$ and $FeSO_4$ are also dosed to precipitate all dangerous heavy metals in solution in the slurry in the form of sulphides. The quantity of $Na_2$ S dosed per kilo of ash must be equal to 3 millimoles (approximately 230 mg) per kg of ash.

As mentioned above, to transform soluble metals into a solid precipitate it is necessary to use reagents that form - at pH 11 - insoluble compounds (sulphides) with the metal.

In the same reactor (2) equipped with a stirrer (4) where the solubilization of the salts and the removal of the carbonate by adding $CaCl_2$ up to a pH of around 11 occurs, $Na_2$ S and $FeSO_4$ are added, always under stirring.

The addition of $Na_2S$ causes the precipitation of insoluble metal sulfides.

Sulfides are notoriously several orders of magnitude less soluble than hydroxides. Metal removal from brine is therefore much more effective than without the addition of sulfide. Lead, the element with the most critical values for release from the ash (2 to 30 mg/L), has a solubility of 15.5 mg/L in its hydroxide form, while in its sulfide form it has a solubility of 0.08 mg/L. Lowering the pH alone is therefore not sufficient to remove lead from the solution. Such removal can instead be achieved with the addition of $Na_2S$. The same applies to zinc and copper, which have hydroxide solubilities several orders of magnitude higher than that of sulfides. The $Na_2S$ dosage must be sufficient to remove all soluble metals present in the ash. By examining thousands of release tests performed on different types of ash, it can be seen that soluble metals, while showing some variability, never exceed a release value greater than 50 mg of soluble metals per kilogram of ash. It follows that the quantity of $Na^2S$ dosed per kilogram of ash must be approximately 230 mg/kg of ash, or 3.0 millimoles of $Na_2S$ per kilogram of ash, in excess of the dissolved metals to be removed.

The function of $FeSO_4$ in conjunction with $Na_2S$ is to remove excess sulphide in the form of iron sulphide, FeS, as well as acting as a coagulant in its ferrous hydrate form and as a reducer of the chromium present in the ash in the hexavalent form;

As mentioned, reducing the pH to 11 and adding $Na_2S$ causes all the heavy metals present to precipitate as very fine particles. The presence of $Fe_2SO_4$ leads to the formation of solid FeS, which precipitates and is easily removable:

$$Fe^{2+} + S^{2-} \rightarrow FeS \downarrow$$

The excess $S^{2-}$ dosed, compared to that actually used to break down heavy metals, is then removed from the solution. Furthermore, ferrous hydrate flakes - $Fe(OH)_2$ - are formed, which promotes the coagulation of the particles together, making them more easily filterable.

Ferrous sulfate also plays a role in reducing the hexavalent chromium present in PSR ash. The compound acts instantly when the pH drops below 9, values that occur within fractions of a second when the slurry comes into contact with the added $FeSO_4$, an acidic compound. These acidic conditions persist in the solution for fractions of a second-then immediately removed by mixing-but are still sufficient to reduce traces of hexavalent chromium and transform it into trivalent chromium.

PHASE E.

At the end of the phase just described, the turbidity is filtered using a vacuum filter (6) ( Nutsche type) to obtain:

- a solid phase (black mud, the black colour being given by the presence of activated carbon), consisting of a mixture of sulphides and hydroxides of heavy metals and activated carbon which gives the black colour, to be sent to the landfill or to an inertisation plant or for recovery (8); the black mud, a hazardous waste, has a weight 5.5 times lower than the initial weight of the ash and a volume up to 35 times lower and can be easily placed in disposal/ inertisation plants.
- a liquid brine containing sodium chloride, sodium carbonate, sodium sulfate with a density of around 1.2 kg/L.

PHASE F.

The liquid phase exiting the filter (6) is added, in a reactor (10) equipped with a stirrer (12), with further $CaCl_2$ to quantitatively precipitate all the sodium carbonates and sulphates still present in the form of calcium carbonates and sulphates and to have only NaCl in solution; the complete removal of the carbonates is certain when the pH reaches the value of 7.

PHASE G.

The liquid phase - free from heavy metals and other dangerous compounds - exiting from reactor 10 is subjected to a new vacuum filtration with a Nutsche filter (14). The following is obtained:

a. a solid consisting of $CaCO_3$ and $CaSO_4$ (white mud); This white mud is a recoverable residue as it consists exclusively of $CaCO_3$ and $CaSO_4$ and is sent to recovery plant 16.
b. a purified brine containing only 28% sodium chloride by weight.

PHASE H

The purified brine, containing only water and sodium chloride (at a concentration of approximately 28% by weight) exiting the filter (14) has a high density (approximately d=1.2 g/ $cm^3$) and is sent to a final mixing reactor (18) where it is added with Sodium Chloride to ensure that the optimum density of d= 1.2 g/ $cm^3$ is reached, controlled with a Pycnometer.
The brine thus purified, collected in tank 20, free of insolubles and polluting compounds, has a minimum content of carbonates and sulphates and therefore optimal purity characteristics to be used for the production of $NaHCO_3$ and $CaCl_2$.
From what has been said it is clear that the ash treatment/recovery process according to the invention presents numerous advantages among which:

- The solid has a weight that is approximately 1/5 that of the initial ash and a volume up to 35 times smaller. More explicitly: from 1000 kg of initial ash (hazardous waste) occupying a volume of 5000 litres (5 $m^3$), approximately 200 kg of solid hazardous waste will be produced with a volume of approximately 180-200 litres. The environmental and economic advantage of switching - for each ton of ash - from having to manage 5000 litres of very fine, toxic and easily airborne dust to a solid with a much smaller volume, approximately 180-200 litres, easily transportable and landfill-friendly is evident.
- The $NaHCO_3$ deriving from brine, if produced at the incinerator that originated the ash, can conveniently be entirely reused as a reagent for the abatement of acid gases in the same plant (Circular Economy), with clear economic and environmental advantages. The environmental advantages of avoiding the transportation of $NaHCO_3$ from the producer to the incineration plant are evident, as are the economic advantages of producing $NaHCO_3$ at home. By producing $NaHCO_3$ starting from purified brine, $CaCl_2$ is also obtained, which is partly reused in the process described for the precipitation of soluble carbonates and partly can be marketed for various possible uses (antifreeze on roads in winter, preparation of fluids for the blasting of oil wells).

## Claims

**1.** Process for treating fly ash with a high sodium content, called PSR (solid residual products), produced in waste incinerator purification plants that use sodium bicarbonate or other basic reagents containing sodium in the acid gas abatement phase. This process involves the following steps, performed in batches:

a) Elemental analysis of each batch of the ash as is using XRF (X-ray fluorescence spectroscopy) to determine the content of all soluble sodium salts present (sodium chloride, sodium sulfate, sodium carbonate, sodium fluoride) and calculate the minimum amount of water required to dissolve them all quantitatively.
b) addition of water, in a quantity calculated as defined in step a), to the ash carried out in a reactor (2), equipped with a stirrer (4), for a time varying between 20 min and 1 hour at room temperature, resulting in a turbid solution with a concentration of sodium salts in solution of no less than 20% and a pH of no less than 11.5-12.5, due to the presence of high concentrations of carbonates;

c) addition of $CaCl_2$ to the turbid solution under mixing, which precipitates the carbonates as solid calcium carbonate until a pH value of approximately 11 is reached.

d) also dose $Na_2S$ and $FeSO_4$ in the same reactor (2) to precipitate all dangerous heavy metals dissolved in the slurry in the form of sulfides, the quantity of $Na_2S$ dosed per kilogram of ash must be approximately 3 millimoles (approximately 230 mg) per kg of ash.

the function of FeSO4, in conjunction with Na2S, is to remove excess sulfide in the form of iron sulfide, as well as acting as a coagulant in its ferrous hydrate form and as a reducer of the chromium present in the ash in its hexavalent form;
e) filtration of the sludge using a vacuum filter (6) to obtain:

- a solid phase (black sludge) free of salts consisting of a mixture of heavy metal sulphides and hydroxides and activated carbon to be sent to the landfill or to an inertization or recovery plant (8), the solid phase being free of soluble salts with a weight approximately 1/5 of the weight of the initial solid and a density greater than 1 g/ml, therefore approximately 5 times the density of the initial ash.
- a liquid phase containing NaCl, $Na_2CO_3$, $Na_2SO_4$.

f) addition of supplementary $CaCl_2$ to the liquid phase, exiting the filter (6), in a reactor (10) equipped with a stirrer (12), to quantitatively precipitate all the sodium carbonates and sulphates still present in the form of calcium carbonates and sulphates until a pH of 7 is reached;

g) vacuum filtration (14) of the sludge at pH=7 exiting the reactor (10) to separate the solid consisting of calcium carbonate and calcium sulphate (white mud) which is sent to a recovery plant (16);

h) sending the purified brine, containing only water and sodium chloride and free of heavy metals, exiting the filter (14) to a mixing reactor (18) where it is added with sodium chloride to reach the optimal density d=1.2 g/$cm^3$ corresponding to 28% by weight of NaCl.

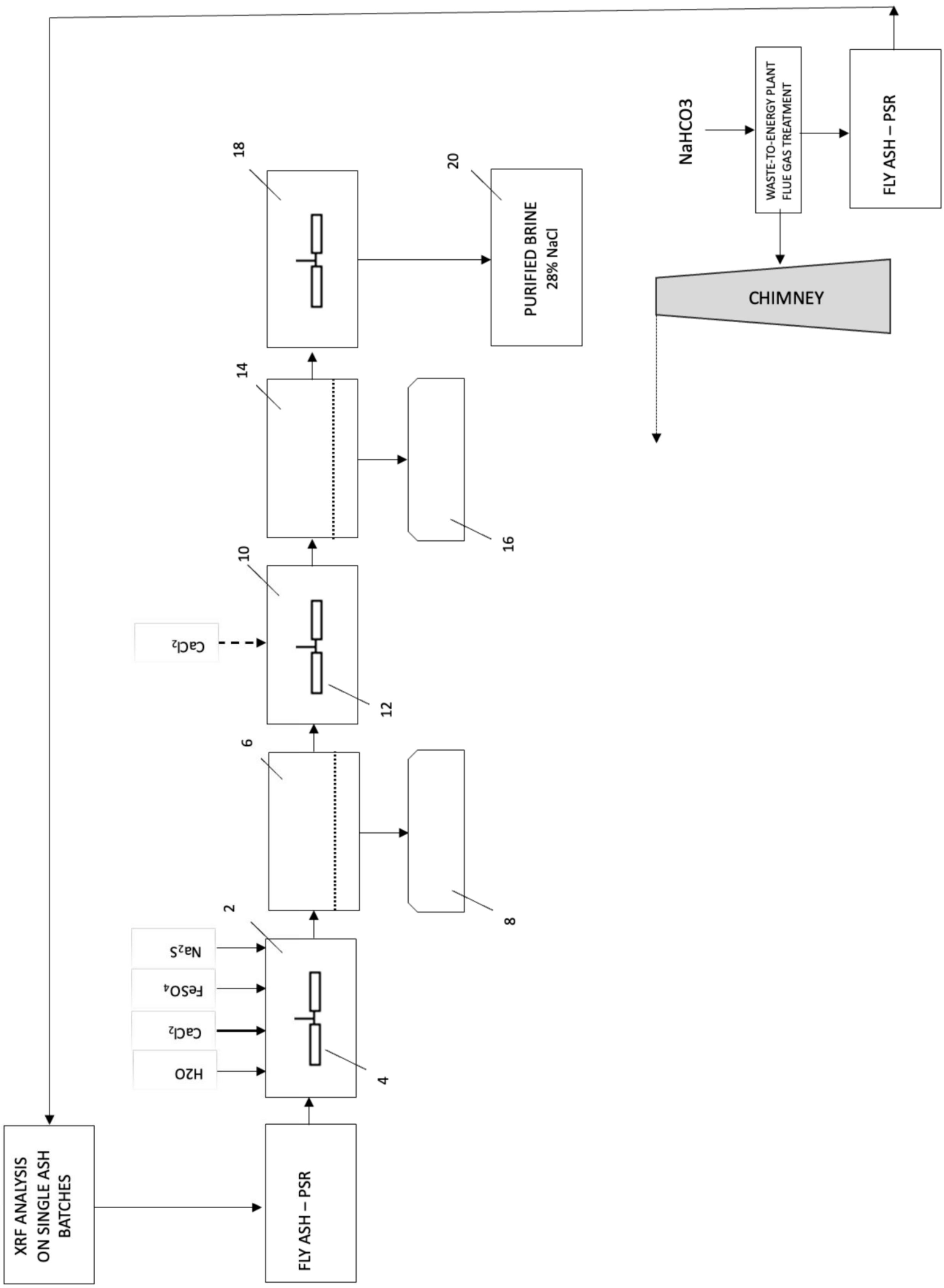
XRF ANALYSIS ON SINGLE ASH BATCHES
FLY ASH – PSR
H2O
$CaCl_2$
$FeSO_4$
$Na_2S$
2
4
6
8
10
12
$CaCl_2$
14
16
18
20
PURIFIED BRINE
28% NaCl
NaHCO3
WASTE-TO-ENERGY PLANT FLUE GAS TREATMENT
FLY ASH – PSR
CHIMNEY

Europäisches Patentamt
European Patent Office
Office européen des brevets

# EUROPEAN SEARCH REPORT

Application Number
EP 25 21 9662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 478 447 A (NINANE LEON [FR] ET AL) 26 December 1995 (1995-12-26) * column 6; figure 2 * ----- | 1 | INV. B09B3/30 A62D3/33 A62D3/36 B09B3/70 B09B5/00 C01D7/00 C01D7/22 C01F11/18 C01F11/28 C01F11/32 C02F9/00 |
| A | US 2018/050919 A1 (DELPLANCHE THIERRY [BE] ET AL) 22 February 2018 (2018-02-22) * claims * ----- | 1 | |
| A | IT VE20 090 034 A1 (VENETA DEPURATORI E AFFINI S VE D A SOC) 10 January 2011 (2011-01-10) * claims * ----- | 1 | |
| A | DE 698 02 281 T2 (B & C SERVICES SARL [FR]; RVX SA [FR]) 18 July 2002 (2002-07-18) * claims; figures 1,2 * ----- | 1 | ADD. A62D101/08 A62D101/40 A62D101/43 A62D101/47 |
| | | | TECHNICAL FIELDS SEARCHED (IPC) |
| | | | B09B C01G A62D C01D C01F |

The present search report has been drawn up for all claims

1

| Place of search | Date of completion of the search | Examiner |
|---|---|---|
| Munich | 10 April 2026 | Tassinari, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 21 9662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | B09B101/30 |
| | | | TECHNICAL FIELDS SEARCHED (IPC) |
| | | | |

The present search report has been drawn up for all claims

1

| Place of search | Date of completion of the search | Examiner |
|---|---|---|
| Munich | 10 April 2026 | Tassinari, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO. EP 25 21 9662

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2026

| Patent document cited in search report | Publication date | Patent family member(s) | Publication date |
|---|---|---|---|
| US 5478447 A | 26-12-1995 | AR 248326 A1 | 12-07-1995 |
| | | AT E148426 T1 | 15-02-1997 |
| | | AU 666328 B2 | 08-02-1996 |
| | | BE 1005291 A3 | 22-06-1993 |
| | | BR 9206475 A | 17-10-1995 |
| | | CA 2118602 A1 | 18-03-1993 |
| | | CY 2064 B1 | 12-06-1998 |
| | | CZ 282450 B6 | 16-07-1997 |
| | | DE 69217231 T2 | 07-08-1997 |
| | | DK 0603218 T3 | 11-08-1997 |
| | | EP 0603218 A1 | 29-06-1994 |
| | | ES 2099277 T3 | 16-05-1997 |
| | | GR 3023278 T3 | 30-07-1997 |
| | | HK 1000593 A1 | 09-04-1998 |
| | | HU 216656 B | 28-07-1999 |
| | | IL 102998 A | 31-10-1996 |
| | | JP 3390433 B2 | 24-03-2003 |
| | | JP H07504880 A | 01-06-1995 |
| | | KR 100230100 B1 | 15-11-1999 |
| | | NO 313043 B1 | 05-08-2002 |
| | | NZ 244177 A | 26-07-1995 |
| | | RU 2099285 C1 | 20-12-1997 |
| | | SG 79903 A1 | 17-04-2001 |
| | | US 5478447 A | 26-12-1995 |
| | | WO 9304983 A1 | 18-03-1993 |
| US 2018050919 A1 | 22-02-2018 | CN 107406267 A | 28-11-2017 |
| | | CN 111675226 A | 18-09-2020 |
| | | DK 3265427 T3 | 29-07-2019 |
| | | EP 3064473 A1 | 07-09-2016 |
| | | EP 3265427 A1 | 10-01-2018 |
| | | ES 2738408 T3 | 22-01-2020 |
| | | PL 3265427 T3 | 29-11-2019 |
| | | US 2018050919 A1 | 22-02-2018 |
| | | WO 2016139265 A1 | 09-09-2016 |
| IT VE20090034 A1 | 10-01-2011 | NONE | |
| DE 69802281 T2 | 18-07-2002 | AT E207771 T1 | 15-11-2001 |
| | | AU 7925098 A | 30-12-1998 |
| | | BR 9812994 A | 15-08-2000 |
| | | CN 1263477 A | 16-08-2000 |
| | | CZ 294643 B6 | 16-02-2005 |
| | | DE 69802281 T2 | 18-07-2002 |
| | | DK 0988094 T3 | 18-02-2002 |
| | | EP 0988094 A1 | 29-03-2000 |

EPO FORM P0459

For more details about this annex : see Official Journal of the European Patent Office, No. 12/82

page 1 of 2

## ANNEX TO THE EUROPEAN SEARCH REPORT ON EUROPEAN PATENT APPLICATION NO.

EP 25 21 9662

This annex lists the patent family members relating to the patent documents cited in the above-mentioned European search report. The members are as contained in the European Patent Office EDP file on
The European Patent Office is in no way liable for these particulars which are merely given for the purpose of information.

10-04-2026

| Patent document cited in search report | Publication date | Patent family member(s) | Publication date |
|---|---|---|---|
| | | ES 2167907 T3 | 16-05-2002 |
| | | FR 2764531 A1 | 18-12-1998 |
| | | JP 2002503146 A | 29-01-2002 |
| | | KR 20010020464 A | 15-03-2001 |
| | | PL 337278 A1 | 14-08-2000 |
| | | PT 988094 E | 29-04-2002 |
| | | US 6403045 B1 | 11-06-2002 |
| | | WO 9856464 A1 | 17-12-1998 |

EPO FORM P0459

For more details about this annex : see Official Journal of the European Patent Office, No. 12/82